# EUROPEAN PATENT SPECIFICATION

(11) **EP 4 577 753 B1**
(45) Date of publication and mention of the grant of the patent: **29.07.2026**
(21) Application number: 23805185.8
(22) Date of filing: 12.10.2023
(51) Int. Cl.: F16F 9/02

(54) **COMPENSATION SYSTEM FOR GAS SPRINGS**
AUSGLEICHSSYSTEM FÜR GASFEDERN
SYSTEME DE COMPENSATION POUR RESSORTS À GAZ

(30) Priority: 21.10.2022 IT 202200021759
(43) Date of publication of application: 02.07.2025
(73) Proprietor: CAPPELLER FUTURA SRL, 36050 Cartigliano (VI) (IT)
(72) Inventor: CAPPELLER, Alessandro, 36050 CARTIGLIANO (VI) (IT)
(74) Representative: De Filippis, Sara
(86) International application number: PCT/IT2023/050228
(87) International publication number: WO 2024/084526

(56) References cited:
- DE-A1- 102020 113 750
- US-A1- 2006 231 991
- US-A1- 2015 375 593

## Description

The present invention concerns a compensation system for gas springs.

The invention falls within the technical field of industrial springs, in particular the technical field of gas springs.

Generally, gas springs include a fixed external body, called cylinder or jacket, and a movable body, also called rod.

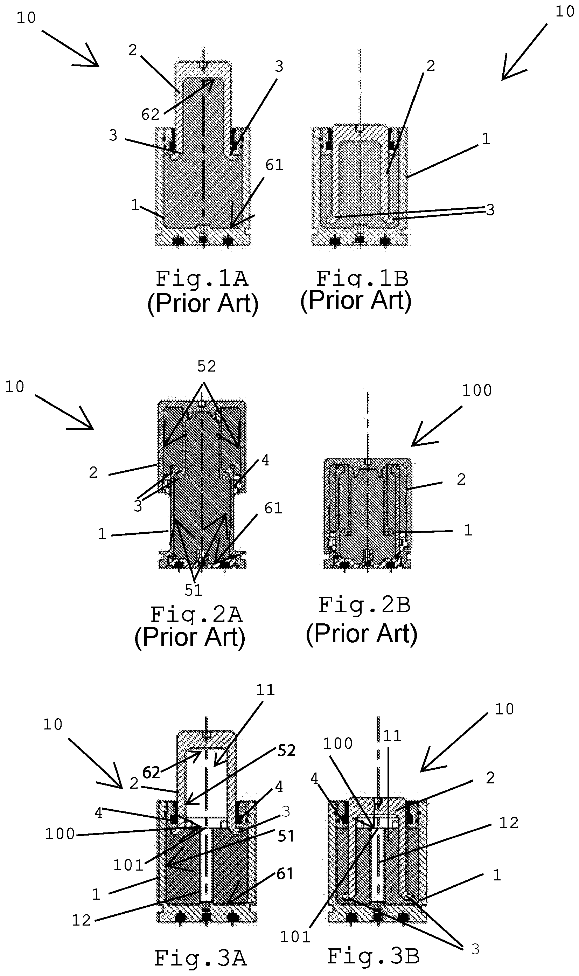

In more detail, the gas springs are configured to allow the rod to slide, through suitable openings and channels, into the fixed external body (Figures 1A, 1B, 2A, 2B).

Furthermore, gas springs include one or more sealing elements, guiding means for the rod and a component for the injection of gas, also called filling valve or loading valve.

Gas springs, according to the prior art, can vary their configuration from an extended configuration, wherein the rod reaches its maximum stroke away from the fixed external body (Figures 1A, 2A), to a compressed configuration wherein the rod is entirely contained into the fixed body (Figures 1B, 2B).

Document DE 10 2020 113750 A1 discloses a relevant compensation system for a gas spring according to the pre-amble of claim 1.

Gas springs on the market can also reach very high initial pressure values.

However, once compressed, internally the spring generates a force proportional to the initial one and to the compression ratio. In other words: the pressure inside the spring increases, increasing the risk of accidents.

In fact, nowadays, one of the most important aspects in the sector is that related to the safety of these devices.

For example, defects that cannot be detected by a visual inspection do not allow a user to recognize a defective gas spring, and therefore, do not allow the implementation of precautionary measures such as the replacement of the damaged component or the entire spring.

In particular, a gas spring has an initial pressure, when it is in an extended configuration, and a final pressure, when the spring itself is in a compressed configuration.

Assuming for simplicity's sake the condition as an isothermal transformation, the spring, when in a compressed configuration and thus having a smaller volume available for the gas inside, will have a higher internal pressure.

If this value were to reach high values it would pose an additional risk to users and an additional source of wear for the gas spring, in particular for the sealing systems.

All these problems are often the cause of unexpected and sudden accidents, against which staff and operators, who are in proximity to the spring, run rather serious risks.

Furthermore, the increase in pressure involves an increase in the force required to compress the spring by the machine to which it is applied, leading to a consequent increase in energy consumption, with the obvious increase in costs.

Since the evolution of these phenomena is difficult to evaluate, the need to guarantee adequate safety conditions is strongly felt in the sector regardless of the technologies available to operators in this sector.

In particular, one of the most felt needs is to reduce the compression ratio p of the gas springs to obtain springs that are safe, but at the same time of high quality.

In more detail, the compression ratio p is given by the ratio between the initial volume occupied by the gas when the spring is in an extended configuration and the final volume occupied by the gas when the spring is in a compressed configuration.

There are external compensation systems, which provide the connection of a series of springs, in order to equalize the pressure inside them and reduce the compression ratio.

However, this solution involves a high cost and a significant increase in the overall size of the system, with obvious consequences.

The objective of the present invention is therefore to provide a compensation system for gas springs capable of solving the above-mentioned drawbacks and critical issues.

In particular, the aim of the present invention is to create a gas spring having inside it a compression ratio p reduced compared to that of traditional springs.

Another aim of the present invention is to create a gas spring having a reduced compression ratio, which is easy and economical to produce and install.

Finally, a final aim of the present invention is to provide gas springs with increased safety of use and effective applicability.

These and other aims are achieved by a compensation system for gas springs according to the attached independent claim.

The object of the present invention is therefore a compensation system for a gas spring equipped with a cylinder comprising a fixed body which is hollow and adapted to contain said gas and a rod comprising a hollow movable body configured to slide along the cylinder to allow the spring to move from an extended configuration to a compressed configuration. The compensation system is adapted to be housed inside a spring of this type and includes a first sliding wall adapted to define a first compensation chamber, so that in the extended configuration the gas contained in the cylinder is outside the first chamber and, in a compressed configuration, the gas contained in the cylinder occupies the internal volume of the first chamber.

In particular, the compensation system includes a second compensation chamber, closed by a second wall sliding along the second chamber itself, so that in the extended configuration the gas contained in the cylinder is outside the first compensation chamber and the second compensation chamber and, in the compressed configuration, the gas contained in the cylinder occupies the respective internal volumes of the first compensation chamber and the second compensation chamber.

This advantageously allows for an increase of the efficiency of the spring while maintaining a relatively low compression ratio.

Preferably, the first chamber has a first volume, and the second chamber has a second volume greater than the first volume, and the first compensation chamber slides into the second compensation chamber to be totally contained in the second chamber when the spring is in the compressed configuration.

In a further embodiment of the compensation system, the first chamber coincides with the rod.

This involves a significant optimization of space inside the spring.

Preferably, the compensation system comprises a first piston that can be attached inside the spring and is configured to slide the first sliding wall along the first chamber.

Furthermore, the first piston is attached inside the spring by means of a loose constraint to allow it to substantially maintain the same degree of stiffness as a spring without the compensation system.

For example, the loose constraint could be a hinge that can be attached to the base of the spring.

In a further embodiment, the compensation system includes a second piston which can be attached inside the spring and is configured to slide the second sliding wall along the second chamber, and the first chamber is formed inside the second piston.

In this way, advantageously, the space of the spring can be exploited to the maximum.

Optionally, some sealing elements are inserted between the piston and the chamber in order to keep the piston in place.

Always optionally, the sealing elements are inserted between the chamber and the cylinder in order to keep the gas inside the spring and prevent the gas from occupying the chamber in the extended configuration.

Preferably, the sealing elements are inserted between the first sliding wall and the internal walls of the chamber to prevent the gas from occupying the chamber in the extended configuration.

Furthermore, the object of the present invention is also a gas spring comprising such a compensation system.

Further detailed technical features are reported in the attached dependent claims.

The present invention will now be described, by way of non-limiting example, according to its preferred embodiments, and with the aid of the attached figures, in which:
- Figures 1A and 1B show a gas spring according to the prior art in extended and compressed configuration, respectively;
- Figures 2A and 2B show a further embodiment of a gas spring according to the prior art in extended and compressed configuration, respectively;
- Figures 3A and 3B show a first embodiment of a gas spring with an integrated compensation system according to the present invention in extended and compressed configuration, respectively;
- Figures 4A and 4B show a second embodiment of a gas spring with an integrated compensation system according to the present invention in extended and compressed configuration, respectively;
- Figures 5A and 5B show a third embodiment of a gas spring with an integrated compensation system according to the present invention in extended and compressed configuration, respectively.

With reference to the mentioned figures, it is represented a preferred embodiment of a compensation system for gas springs according to the invention.

Referring to the figures shown above, the compensation system for gas springs, which is the object of the invention, is indicated by the reference number 100 and the spring wherein it is inserted is indicated by the reference number 10.

In a first embodiment, according to the present invention, the spring 10 comprises a fixed hollow body 1 or cylinder and a movable hollow body 2 or rod, having a concavity opposite to said cylinder 1.

The rod 2 is configured to slide into the cylinder 1 from an extended or open configuration (Figures. 3A, 4A, 5A) to a compressed or closed configuration (Figures 3B, 4B, 5B).

Advantageously, the cylinder 1 and the rod 2 include respective inner lateral surfaces, and respective inner base surfaces or bottoms, as will be better explained below.

In particular, the cylinder 1 comprises a lateral surface indicated by the reference number 51 and a base surface 61 or bottom; the rod 2 comprises a respective lateral surface 52 and a base surface 62 or bottom.

Advantageously, on the aforementioned lateral surfaces 51, 52, as well as on the base surfaces 61, 62, sealing elements, gaskets and/or other devices adapted to improve the performance of the springs 10 can be attached or connected.

In more detail, the lateral surfaces 51 and 52 laterally delimit the respective cylinder 1 and the respective rod 2.

Similarly, the base surfaces 61 and 62 are adapted to delimit the lower boundaries of the respective cylinder 1 and the respective rod 2 at the bottom, acting as a base.

Furthermore, the cylinder 1 and the rod 2 have a further respective open surface, opposite to surface 61, 62, depending on whether it is the cylinder 1 or the rod 2, to allow the passage of gas and the communication between the cylinder 1 and the rod 2.

The cylinder 1 and the rod 2 are made in such a way that the rod 2 can be inserted into the cylinder 1 and can slide into it while maintaining contact between the external portion of the lateral surfaces 52 of the rod 2 and the internal portion of the lateral surfaces 51 of the cylinder 1.

Furthermore, the cylinder 1 and the rod 2 comprise one or more chambers for containing the gas inside the spring 10.

In particular, the lateral surface 51, the base surface 61 and the open surface delimit, inside the cylinder 1, one or more chambers for containing the gas.

Even more particularly, the lateral surface 52, the base surface 62 and the open surface delimit, inside the rod 2, one or more chambers for containing the gas.

Advantageously, the chambers for containing the gas comprise one or more openings to allow the passage of the gas itself.

Again advantageously, the spring 10 in all its embodiments includes a plurality of gaskets 4 placed in suitable seats or housings in contact with the cylinder 1 and with the rod 2 in such a way as to guarantee the proper sliding of the rod 2 into the cylinder 1, avoiding gas leaks from inside the spring 10.

In particular, the gaskets 4 or sealing elements are designed to prevent the internal gas of the spring 10 from escaping while in its static condition and also during its transition from a compressed configuration to an extended configuration and vice versa.

Advantageously, in the first embodiment, that can be seen in Figures 3A and 3B, the plurality of gaskets 4 is substantially arranged in correspondence with the open surface of the cylinder 1.

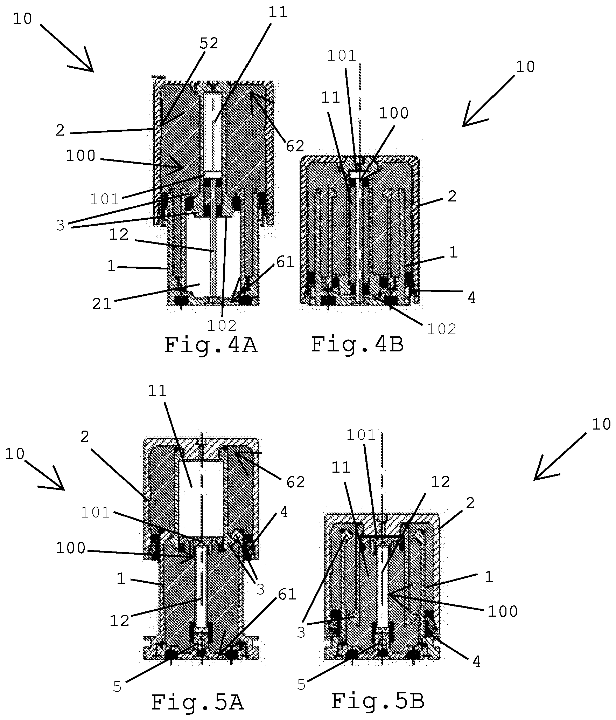

In the second and third embodiment of the spring 10, that can be seen in Figures 4A, 4B and 5A, 5B, this plurality of gaskets is substantially placed in correspondence with respective seats in the open surface of the rod 2.

Again advantageously, the spring 10 comprises an end-of-stroke system or element 3 capable of stopping the sliding of the rod 2 into the cylinder 1.

In more detail, such an end-of-stroke system or element 3 does not allow the rod 2 to decouple from the cylinder 1 when the latter reaches its maximum stroke or maximum extension (Fig. 3A, 4A, 5A).

The present invention allows the compression ratio p to be reduced without modifying the intrinsic and manufacturing parameters of the spring such as initial height and diameter, while guaranteeing an appropriate spring force.

Advantageously, to reduce the compression ratio p described later in the patent, a compensation system 100 is inserted inside the spring 10.

In particular, the compensation system 100 reduces the initial volume V₁ available for the gas in the extended configuration, thus reducing the compensation ratio.

In more detail, such a compensation system 100 includes a sliding wall 101, which closes a chamber 11 formed inside the rod 2.

In this particular embodiment, the sliding wall 101 is attached inside the spring by means of a piston 12, which in turn is attached internally to the cylinder 1.

In particular, the piston 12 has a "T" shape and at its lower end (the stem of the "T") it is attached to the base surface 61 of the cylinder 1 while, at the opposite end (consisting of the sliding wall 101), the one with greater extension or piston head, it is placed in correspondence with the chamber 11, so as to be sealed with the inner walls of the aforementioned chamber 11.

Preferably, the lower end of the piston 12 is attached to the base 61 by means of a loose constraint 5, such as for example a hinge or a connecting rod. This, advantageously, makes it possible to substantially maintain the same degree of stiffness as a spring without the compensation system 100 of the invention.

Of course, the sliding wall can be attached inside the spring in various ways; it is sealed along the internal walls, for example those of the rod, and is able to slide along them.

In embodiments not shown, the sliding wall may be constrained to the spring base by a coil spring.

In further embodiments not shown, the compensation system 100 can comprise the sliding wall 100 slidingly constrained to further walls, which can be fastened to the base of the spring itself, for example by screwing.

Advantageously, to keep the piston 12 in place, sealing elements are inserted between the piston 12 and the walls of the chamber 11.

Again advantageously, sealing elements are also arranged between the chamber 11 and the cylinder 1 to keep the gas inside the spring and to prevent the gas from occupying the chamber 11 in the extended configuration.

Furthermore, always to prevent the gas from occupying the chamber 11 in the extended configuration, sealing elements can be inserted between the first sliding wall and the internal walls of the chamber 11.

In the embodiments being examined, the chamber 11 is contained inside the rod 2 and can occupy entirely (first embodiment, Figures 3A and 3B) or partially (second and third embodiments, Figures 4A, 4B and 5A, 5B) the internal volume of the rod 2.

Advantageously, in the second and third embodiments, the chamber 11 is made separately from the rod 2 and integrated with it.

Preferably, in these cases, the chamber 11 is also attached to the rod 2 by means of a loose constraint 5.

Operationally, when the spring 10 moves from the extended configuration to the compressed configuration, the rod 2 slides along the cylinder 1 and the chamber 11 moves integrally with the rod 2.

When the spring 10 reaches the compressed configuration, the chamber 11 is completely inserted into the cylinder 1 and its internal volume is completely occupied by the gas.

In particular, in the compressed configuration, the first sliding wall 101 is in contact with the bottom of the chamber 11.

In the second embodiment of the spring 10, as can be seen in Figures 4A and 4B, unlike the first embodiment, the cylinder 1 includes a second sliding wall 102, which defines a second compensation chamber 21, to increase the initial volume that cannot be occupied by the gas, when the spring 10 is in the extended configuration (Fig. 4A).

In detail, in this embodiment shown in Figures 4A and 4B, this second chamber 21 has a larger size than the chamber 11 and is configured to contain the chamber 11 itself when the spring is in the compressed configuration (Fig. 4B).

Advantageously, again in the aforementioned embodiment, the compression ratio p is further reduced.

In the third embodiment (Figures 5A and 5B) the spring 10 has the same characteristics as the first embodiment, except that the chamber 11 occupies only a central part of the internal volume of the rod 2 and not its entirety.

Advantageously, the device 100 occupies a very small volume of the final volume V₂ of the spring 10 while it reduces the initial volume V₁ occupied by the gas by a considerable value.

This allows for a significant reduction in the compression ratio p, potentially reaching values of, for example, approximately 1.2-1.3, depending on the embodiment of the spring 10.

Again advantageously, the gas spring 10 guarantees important initial forces even with the inclusion of the compensation system 100.

Operationally, when the spring 10 is in the configuration of maximum extension (Figures 3A, 4A, 5A), the rod 2 reaches its maximum stroke and the spring 10 reaches its maximum height.

In this condition, which is the most used during the work phase, the internal volume of the spring 10 reaches its maximum value and consequently the corresponding internal pressure will be at its minimum value.

Instead, when the spring 10 is in the compressed configuration (Figures 3B, 4B, 5B), i.e. when the rod 2 is completely inserted into the cylinder 1, the internal volume is minimum and the corresponding pressure reaches the maximum value.

In particular, the spring 10 is considered as a closed system wherein an isothermal transformation occurs, i.e. wherein the product between volume and pressure remains constant.

A parameter of fundamental importance and characteristic for this sector is the compression ratio p, a value given by the ratio between the initial internal volume V₁ (extended configuration) and the final internal volume V₂ (compressed configuration) of the spring 10.

In more detail, the initial internal volume V₁ and the final internal volume V₂ are given by the internal volume of the chambers of the cylinder 1 and the rod 2 in the extended and compressed configurations, respectively.

This compression ratio p represents an important parameter also to understand the force and risks characterizing the springs being analysed.

In more detail, the higher the compression ratio p is, the more pressure develops inside the spring 10 under compression, and the higher the risk due to the release of the rod 2 in case of breakage of the spring 10 itself.

Furthermore, this high ratio p involves a greater expenditure of energy for the compression of the spring 10.

In more detail, by way of example, a gas spring according to the prior art has a total height, in the extended configuration, of 145 mm and a diameter of 75 mm. This spring, at a pressure of 150 bar, guarantees an initial force of 2385 daN. The compression ratio p between the initial volume V₁ and the final volume V₂ of the previously mentioned spring is 1.69 and, in the compressed configuration, the final force is approximately 4030 daN.

The present invention enables a better compression ratio than the springs on the market; in fact, the introduction of the new compensation system 100 enables a further reduction of the compression ratio compared to the existing solutions.

In particular, compared to the previously mentioned spring with an initial height of 145 mm, a diameter of 75 mm, and a compression ratio p of 1.69, the system 100 enables the achievement of a compression ratio p of 1.26.

By way of example, a traditional spring as in Figures 2A, 2B with a compression ratio p of 1.66, an initial force of 2494 daN and a final force of 4139 daN, can achieve, by means of the embodiment with a chamber 11 as in Figure 5A, a compression ratio p of 1.38 and initial and final forces of 2502 daN and 3452 daN, respectively. Even in this case, although smaller forces were obtained, the advantages deriving from obtaining a compensation ratio p of 1.38 are truly remarkable.

Advantageously, in the embodiment with the two chambers 11 and 21 shown in Figures 4A, 4B, the same spring 10, of the above described case, achieves a compression ratio p of even 1.2, decreasing only slightly the values of the initial and final forces of the spring 10 itself and thus obtaining even more satisfactory results.

From the above description, the characteristics of a compensation system 100 for gas springs, object of the invention, are clear, as well as the advantages thereof.

## Claims

1. A compensation system (100) for a gas spring (10) equipped with
- a cylinder (1) comprising a fixed hollow body equipped with a first concavity and adapted to contain said gas;
- a rod (2) comprising a hollow mobile body, having a second concavity opposite to the first concavity and being configured to slide along said cylinder (1) to move said spring (10) from an extended configuration to a compressed configuration;
the compensation system (100) being adapted to be housed inside the spring (10) and comprising:
- a first sliding wall (101) adapted to define a first compensation chamber (11, 21) inside the spring (10),
so that
in said extended configuration said gas contained in said cylinder (1) is outside said first chamber (11, 21), and
in said compressed configuration said gas contained in said cylinder (1) occupies the first chamber (11, 21)
the compensation system (100) being **characterized**
**in that** it comprises a second sliding wall (102) adapted to define a second compensation chamber (21) such that in said extended configuration said gas contained in said cylinder (1) is outside said first compensation chamber (11) and said second compensation chamber (21), and in said compressed configuration said gas contained in said cylinder (1) occupies said first compensation chamber (11) and said second compensation chamber (21) and
**in that** the first compensation chamber (11) has a first volume, and the second compensation chamber (21) has a second volume greater than the first volume, and
**in that** said first compensation chamber (11) slides into said second compensation chamber (21), so as to be totally contained into the second chamber (21) when said spring (10) is in said compressed configuration.

2. The compensation system (100) as in claim 1 **characterized in that** the first chamber (11) coincides with the rod (2).

3. The compensation system (100) as per claim 1 or 2 **characterized in that** it comprises a first piston (12) which can be attached inside the spring (10) and configured to slide the first sliding wall (101) along said first chamber (11, 21).

4. The compensation system (100) as in claim 3 **characterized in that** said first piston (12) is attached inside the spring (10) by means of a loose constraint (5) so as to allow it to substantially maintain the same degree of stiffness as a spring without said compensation system (100).

5. The compensation system (100) as per one of claims 1-4 **characterized in that** it comprises a second piston that can be attached inside the spring (10) and configured to slide the second sliding wall (102) along said second chamber (21), and **in that** said first chamber (11) is formed inside the second piston.

6. The compensation system (100) as one of claims 1-5 **characterized in that** it comprises sealing elements inserted between said first sliding wall (101) and said chamber (11) so as to maintain the first sliding wall (101) in place.

7. The compensation system (100) as per claim 6 **characterized in that** said sealing elements are inserted between said chamber (11) and said cylinder (1) so as to keep the gas inside said spring (10) and prevent the gas from occupying said chamber (11) in said extended configuration of said gas spring (10).

8. A gas spring (10) comprising a compensation system (100) as per one of claims 1-7.

## Patentansprüche

1. Ausgleichssystem (100) für eine Gasfeder (10), die mit
- einen Zylinder (1), der einen feststehenden Hohlkörper umfasst, der mit einer ersten Vertiefung versehen und zur Aufnahme des Gases ausgelegt ist;
- eine Stange (2), die einen hohlen, beweglichen Körper umfasst, der eine der ersten Vertiefung gegenüberliegende zweite Vertiefung aufweist und so ausgebildet ist, dass er entlang des Zylinders (1) gleitet, um die Feder (10) aus einer gestreckten in eine zusammengedrückte Stellung zu bewegen;
wobei das Ausgleichssystem (100) so ausgelegt ist, dass es in der Feder (10) untergebracht werden kann, und Folgendes umfasst:
- eine erste Schiebewand (101), die dazu ausgelegt ist, eine erste Ausgleichskammer (11, 21) im Inneren der Feder (10) zu bilden,
damit
in dieser ausgefahrenen Konfiguration befindet sich das in dem Zylinder (1) enthaltene Gas außerhalb der ersten Kammer (11, 21), und
In dieser komprimierten Konfiguration nimmt das in dem Zylinder (1) enthaltene Gas die erste Kammer (11, 21) ein
wobei das Kompensationssystem (100) **dadurch gekennzeichnet ist, dass**
darin, dass es eine zweite Schiebewand umfasst (102), die so ausgelegt ist, dass sie eine zweite Ausgleichskammer (21) bildet, sodass sich in der ausgefahrenen Konfiguration das in dem Zylinder (1) enthaltene Gas außerhalb der ersten Ausgleichskammer (11) und der zweiten Ausgleichskammer (21) befindet und in der komprimierten Konfiguration das in dem Zylinder (1) enthaltene Gas die erste Ausgleichskammer (11) und die zweite Ausgleichskammer (21) ausfüllt, und
indem die erste Ausgleichskammer (11) ein erstes Volumen aufweist und die zweite Ausgleichskammer (21) ein zweites Volumen aufweist, das größer ist als das erste Volumen, und
wobei die erste Ausgleichskammer (11) in die zweite Ausgleichskammer (21) gleitet, sodass sie vollständig in der zweiten Kammer (21) enthalten ist, wenn sich die Feder (10) in ihrer zusammengedrückten Konfiguration befindet.

2. Ausgleichssystem (100) nach Anspruch 1, **dadurch gekennzeichnet, dass** die erste Kammer (11) mit der Stange (2) zusammenfällt.

3. Ausgleichssystem (100) gemäß Anspruch 1 oder 2, **dadurch gekennzeichnet, dass** es einen ersten Kolben (12) umfasst, der im Inneren der Feder (10) angebracht werden kann und so ausgebildet ist, dass er die erste Gleitwand (101) entlang der ersten Kammer (11, 21) verschiebt.

4. Ausgleichssystem (100) nach Anspruch 3, **dadurch gekennzeichnet, dass** der erste Kolben (12) mittels einer losen Halterung (5) im Inneren der Feder (10) befestigt ist, so dass er im Wesentlichen denselben Steifigkeitsgrad wie eine Feder ohne das Ausgleichssystem (100) beibehält.

5. Ausgleichssystem (100) gemäß einem der Ansprüche 1-4, **dadurch gekennzeichnet, dass** es einen zweiten Kolben umfasst, der im Inneren der Feder (10) angebracht werden kann und so ausgebildet ist, dass er die zweite Gleitwand (102) entlang der zweiten Kammer (21) verschiebt, und dass die erste Kammer (11) im Inneren des zweiten Kolbens ausgebildet ist.

6. Ausgleichssystem (100) gemäß einem der Ansprüche 1-5, **dadurch gekennzeichnet, dass** es Dichtungselemente umfasst, die zwischen der ersten Gleitwand (101) und der Kammer (11) angeordnet sind, um die erste Gleitwand (101) in ihrer Position zu halten.

7. Vergütungssystem (100) gemäß Anspruch 6
**dadurch gekennzeichnet, dass** die Dichtungselemente zwischen der Kammer (11) und dem Zylinder (1) so angeordnet sind, dass das Gas in der Feder (10) gehalten wird und dass das Gas in der ausgedehnten Konfiguration der Gasfeder (10) nicht in die Kammer (11) eindringen kann.

8. Gasfeder (10) mit einem Ausgleichssystem (100) gemäß einem der Ansprüche 1-7.

## Revendications

1. Système de compensation (100) pour un ressort à gaz (10) équipé de
- un cylindre (1) comprenant un corps creux fixe muni d'une première concavité et destiné à contenir ledit gaz;
- une tige (2) comprenant un corps creux mobile, présentant une deuxième concavité située à l'opposé de la première concavité et conçue pour coulisser le long dudit cylindre (1) afin de faire passer ledit ressort (10) d'une configuration étirée à une configuration comprimée;
le système de compensation (100) étant conçu pour être logé à l'intérieur du ressort (10) et comprenant:
- une première paroi coulissante (101) destinée à définir une première chambre de compensation (11, 21) à l'intérieur du ressort (10),
afin que
dans ladite configuration déployée, le gaz contenu dans ladite bouteille (1) se trouve à l'extérieur de ladite première chambre (11, 21), et
dans cette configuration comprimée, le gaz contenu dans ladite bouteille (1) occupe la première chambre (11, 21)
le système de compensation (100) **se caractérisant par** en ce qu'il comprend une deuxième paroi coulissante (102) adaptée pour définir une deuxième chambre de compensation (21) de telle sorte que, dans ladite configuration déployée, ledit gaz contenu dans ledit cylindre (1) se trouve à l'extérieur de ladite première chambre de compensation (11) et de ladite deuxième chambre de compensation (21), et que, dans ladite configuration comprimée, ledit gaz contenu dans ledit cylindre (1) occupe ladite première chambre de compensation (11) et ladite deuxième chambre de compensation (21) et
en ce que la première chambre de compensation (11) présente un premier volume, et la deuxième chambre de compensation (21) présente un deuxième volume supérieur au premier volume, et
de telle sorte que ladite première chambre de compensation (11) coulisse à l'intérieur de ladite deuxième chambre de compensation (21), de manière à être entièrement contenue dans la deuxième chambre (21) lorsque ledit ressort (10) se trouve dans ladite configuration comprimée.

2. Système de compensation (100) selon la revendication 1, **caractérisé en ce que** la première chambre (11) coïncide avec la tige (2).

3. Système de compensation (100) selon la revendication 1 ou 2, **caractérisé en ce qu'**il comprend un premier piston (12) pouvant être monté à l'intérieur du ressort (10) et agencé pour faire coulisser la première paroi coulissante (101) le long de ladite première chambre (11, 21).

4. Système de compensation (100) selon la revendication 3, **caractérisé en ce que** ledit premier piston (12) est fixé à l'intérieur du ressort (10) au moyen d'une liaison lâche (5) de manière à lui permettre de conserver sensiblement le même degré de rigidité qu'un ressort dépourvu dudit système de compensation (100).

5. Système de compensation (100) selon l'une des revendications 1-4, **caractérisé en ce qu'**il comprend un deuxième piston pouvant être monté à l'intérieur du ressort (10) et agencé pour faire coulisser la deuxième paroi coulissante (102) le long de ladite deuxième chambre (21), et **en ce que** ladite première chambre (11) est formée à l'intérieur du deuxième piston.

6. Système de compensation (100) selon l'une des revendications 1-5, **caractérisé en ce qu'**il comprend des éléments d'étanchéité insérés entre ladite première paroi coulissante (101) et ladite chambre (11) de manière à maintenir la première paroi coulissante (101) en place.

7. Système de compensation (100) selon la revendication 6
**caractérisé en ce que** lesdits éléments de joint sont insérés entre ladite chambre (11) et ledit cylindre (1) de manière à maintenir le gaz à l'intérieur dudit ressort (10) et à empêcher le gaz d'occuper ladite chambre (11) dans ladite configuration déployée dudit ressort à gaz (10).

8. Ressort à gaz (10) comprenant un système de compensation (100) selon l'une des revendications 1-7.
